# FASCICULE DE BREVET EUROPEEN

(11) **EP 2 449 745 B1**
(45) Date de publication et mention de la délivrance du brevet: **09.11.2022**
(21) Numéro de dépôt: 10734286.7
(22) Date de dépôt: 21.06.2010
(51) Int. Cl.: H04L 65/10, H04L 65/1016, H04L 67/00

(54) **PROCÉDÉ DE SÉLECTION D'UNE RESSOURCE RÉSEAU**
VERFAHREN FÜR DIE AUSWAHL EINER NETZWERKRESSOURCE
METHOD FOR SELECTING A NETWORK RESOURCE

(30) Priorité: 30.06.2009 FR 0954468
(43) Date de publication de la demande: 09.05.2012
(73) Titulaire: 3G Licensing S.A., 2132 Luxembourg (LU)
(72) Inventeur: LE ROUZIC, Jean-Claude, F-22560 Trebeurden (FR); DOREE, José, F-22300 Lannion (FR)
(74) Mandataire: Metroconsult Srl
(86) Numéro de dépôt international: PCT/FR2010/051252
(87) Numéro de publication internationale: WO 2011/001061

(56) Documents cités:
- WO-A1-2007/091808
- WO-A2-2004/112415
- US-A1- 2007 209 061
- US-B1- 6 567 667

## Description

La présente invention concerne les réseaux IP (*"Internet Protocolʺ*)*,* et notamment ceux d'entre eux qui sont aptes à mettre en œuvre des protocoles de contrôle de session évolués. Les réseaux IP permettent la diffusion de données conversationnelles, tels que "Voix sur IP" (VoIP), "Partage de Contenu", "Présence", ou "Messagerie Instantanée".

Plus particulièrement, la présente invention concerne les moyens mis en place pour permettre à l'initiateur ou au destinataire d'un flux multimédia d'utiliser la ressource réseau la plus adéquate parmi celles qui lui sont accessibles.

Les protocoles de contrôle de session évolués classiques, tels que les protocoles H.323 et SIP *("Session Initiation Protocolʺ*)*,* utilisent des messages dits "de signalisation", qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole H.323 a été mis au point par l'UIT-T. Il spécifie des procédures concernant la signalisation, la négociation de codeur-décodeur, et le transport de l'information. Il est largement utilisé par les fabricants d'équipements vocaux et de conférences vidéo, ainsi que dans plusieurs applications Internet en temps-réel telles que "NetMeeting".

Le protocole SIP a été défini par l'IETF dans le document RFC 3261. Ce protocole permet l'établissement, la modification et la terminaison de sessions multimédia dans un réseau utilisant le protocole IP. Le protocole SIP permet également des procédures de notification d'événements et l'envoi d'informations en dehors du contexte d'une session. Il est largement utilisé pour des commandes de services de messagerie instantanée. Ainsi, dans un environnement SIP, il existe différents types de communications telles que des requêtes d'établissement de sessions et des requêtes échangées hors de tout dialogue. Dans les dispositifs obéissant à ce protocole, les fonctions associées sont mises en œuvre par une entité logique appelée *"User Agent"* (signifiant "agent d'usager" en anglais), qui se comporte, selon les circonstances, comme un "client" ou comme un "serveur".

Le document de l'art antérieur WO2007091808 divulgue la sélection par un serveur/ terminal VCC (Voice Call Continuity) d'un domaine en tenant compte des préférences de l'utilisateur et de la politique de l'opérateur et en passant des appels sur le domaine sélectionné.

Un autre document de l'art antérieur US6567667 divulgue un procédé pour migrer des services entre des domaines en utilisant des moyens de sélection pour migrer sélectivement des réseaux à partir d'un mélange de circuits commutés et commutés par paquets vers tous les réseaux à commutation de paquets Internet sur une période de temps.

Encore un autre document de l'art antérieur US2007209061 divulgue des noeuds de sécurité pour contrôler l'accès aux systèmes multimédias de protocole Internet à partir de systèmes d'application à partir d'un réseau de confiance extérieur.

L'invention convient bien en particulier aux infrastructures de type IMS (*"IP Multimedia Subsystem"*)*.* L'IMS a été défini par les organismes de normalisation 3GPP (*"3rd Génération Partnership Project'*) et TISPAN (" *Telecommunications and Internet Converged Services and Protocols for Advanced Networking"*)*.* C'est une architecture de réseau introduite par le 3GPP pour les réseaux mobiles, puis reprise par TISPAN pour les réseaux fixes. Cette architecture, qui utilise le protocole SIP, permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en œuvre une politique de gestion, fournir une Qualité de Service prédéterminée, et calculer les montants à facturer aux clients. L'IMS permet actuellement d'accéder à des services de type téléphonie, visiophonie, présence et messagerie instantanée, dont elle gère aussi l'interaction.

Lorsqu'un client enregistré sur un réseau tel que ceux décrits ci-dessus souhaite bénéficier d'un service multimédia offert par le réseau, il émet vers le réseau, ou reçoit de la part du réseau, un message de signalisation. Or les clients ont parfois la possibilité d'utiliser différentes ressources pour le transport d'un flux multimédia donné. Les ressources réseau concernées par la présente invention sont des réseaux physiques ou virtuels.

De manière classique, un "réseau physique" est un ensemble de caractéristiques électromécaniques destiné au transport de données sous forme de "bits" (couche 1 du modèle OSI). Pour se connecter, un client peut disposer de plusieurs interfaces physiques (par exemple, des fibres optiques, des paires de fils de cuivre ou des interfaces radio).

Un "réseau virtuel" est construit sur la base d'un réseau physique et comprend des communications connectées fonctionnant en mode paquets. Un réseau virtuel permet d'obtenir des caractéristiques spécifiques, notamment en termes de Qualité de Service (par exemple, débit, latence ou gigue), de sécurité (par exemple, chiffrement ou authentification) ou de routage (par exemple, un VPN ; ce sont les initiales des mots anglais " *Virtual Private Network"* signifiant "réseau privé virtuel"). On déclare habituellement un réseau virtuel sur une couche 2, 3 ou 4 (ou intermédiaire) du modèle OSI. Lorsque différents réseaux virtuels sont déclarés sur un même réseau physique, ils sont distingués par des identifiants propres à la couche OSI correspondante.

Selon la technologie de base du réseau physique (X.25, ATM, RNIS, IP et ainsi de suite), on peut déclarer différents types de réseaux virtuels. En voici quelques exemples.

Dans le cadre de X.25, le réseau virtuel est identifié par un VCI (initiales des mots anglais *"Virtual Channel Identifier"* signifiant "identificateur de canal virtuel"). Dans le cadre de l'ATM (initiales des mots anglais *"Asynchronous Transfer Mode"* signifiant "Mode de Transfert Asynchrone"), le réseau virtuel est identifié par un VCI et en outre par un VPI (initiales des mots anglais *"Virtual Path Identifier*ʺ signifiant "identificateur de chemin virtuel"). Les technologies X.25 et ATM offrent des connexions de deux types : celles associées individuellement à un appel, appelées SVC (initiales des mots anglais *"Switched Virtual Circuits"* signifiant "réseaux virtuels commutés"), et celles établies de manière permanente entre deux terminaux, appelées PVC (initiales des mots anglais *"Permanent Virtual Circuits"*)*.*

Dans le cadre du réseau public RNIS (Réseau Numérique à Intégration de Services), le service LLP (Liaisons Logiques Permanentes) permet le transfert de données d'usager sous forme de trames véhiculées dans le "canal D".

Dans le cadre de l'IP, on peut utiliser :
- un VLAN (initiales des mots anglais *"Virtual Local Area Network"* signifiant "réseau local virtuel"), où l'on ajoute une étiquette dédiée aux en-têtes de paquets de données (couche 2 ou couche 3 du modèle OSI), ou
- un tunnel MPLS (initiales des mots anglais *"MultiProtocol Label Switching"* signifiant "commutation d'étiquettes multi-protocoles"), où, là aussi, les paquets de données sont étiquetés (couche 2 du modèle OSI), ou encore
- IPSec, qui sécurise le trafic sur IP par authentification et/ou chiffrement des paquets de données (couche 3 du modèle OSI).

Le dispositif client à qui de telles ressources sont accessibles peut par exemple être un terminal fixe ou mobile, ou une passerelle domestique ou située dans une entreprise (*"Residential Gateway"* en anglais), ou encore une passerelle d'opérateur réseau (*"Voice Gateway"* en anglais) telle qu'un DSLAM-SIP (DSLAM sont les initiales des mots anglais *"Digital Subscriber Line Access Multiplexer*ʺ signifiant "multiplexeur d'accès de lignes d'abonnés numériques" ; il s'agit d'un dispositif collectant le trafic de données DSL qui transite sur un certain nombre de lignes téléphoniques).

On peut alors se demander s'il ne serait pas avantageusement possible pour un client d'un flux multimédia qui a accès à une pluralité de ressources réseau, de sélectionner une ressource particulière en fonction de paramètres pratiques tels que l'identité de l'émetteur d'une demande d'établissement d'une session multimédia et/ou du destinataire de cette demande et/ou de la nature du flux et/ou du numéro composé, et ainsi de suite.

Par exemple, si un appel VoIP est identifié comme étant un appel d'urgence, il pourrait emprunter une ressource prioritaire.

Comme autre exemple, on pourrait définir dans une base de données clients une catégorie particulière de clients appelée "services_ secrets", qui comprendrait l'ensemble des agents d'un service ministériel de contre-espionnage. On pourrait alors attribuer des voies de communication sécurisées pour les appels émis ou reçus par ce type d'abonnés.

Un autre exemple encore serait de sélectionner la ressource en fonction de la nature (audio, vidéo, image, et ainsi de suite) et des caractéristiques techniques (débit, et ainsi de suite) du flux multimédia concerné.

Or dans l'état de l'art, y compris dans le protocole SIP, il n'existe pas d'agencement protocolaire pour désigner à un client la ressource réseau qu'il peut, ou doit, utiliser sélectivement. Dans certains cas, on a recours à des solutions palliatives nécessitant le déploiement d'équipements dédiés ; ces solutions sont donc onéreuses et compliquées à mettre en oeuvre.

La présente invention concerne donc, selon un premier aspect, un procédé de sélection d'une ressource réseau, dans lequel un dispositif dit "contrôlé" connecté à un réseau IP peut accéder en outre à au moins un autre réseau de télécommunications physique et/ou virtuel, comprenant une étape dans laquelle une requête est émise ou relayée par ledit contrôlé ou à destination dudit contrôlé. Ledit procédé est remarquable en ce que le contrôlé reçoit ensuite un signal de contrôle de session contenant un identifiant de ressource représentatif du réseau physique ou virtuel que le contrôlé peut ou doit utiliser pour satisfaire ladite requête.

Par "requête", on entend ici toute demande d'établissement d'une session multimédia telle qu'un appel téléphonique, ou demande de méthode informatique ou demande de service. Dans la description ci-dessous, l'entité à l'origine d'une requête sera appelée "le demandeur", et l'entité destinataire d'une requête sera appelée "le demandé".

On notera que, le cas échéant, le réseau requis pour satisfaire ladite requête peut être ledit réseau (physique) IP lui-même.

Ainsi, selon l'invention, on peut, en premier lieu, opérer un aiguillage différencié "à la source", en indiquant à un client désireux d'établir ou relayer un flux multimédia la ressource réseau la plus appropriée à utiliser pour transporter ce flux. On peut également, en second lieu, désigner à un client destinataire d'un flux multimédia la ressource réseau la plus appropriée à utiliser pour transporter ce flux.

On notera que, en fonction de la politique choisie par l'opérateur réseau, le contrôlé pourra le cas échéant être autorisé à sélectionner un autre type de ressource réseau que le type associé à l'identifiant de ressource reçu. Comme expliqué ci-dessous, une telle caractéristique peut notamment être avantageuse lorsque le contrôlé constate qu'il lui est impossible de sélectionner une ressource réseau conforme à l'identifiant de ressource reçu ; dans ce cas, selon des caractéristiques particulières, le contrôlé pourra avantageusement sélectionner une autre ressource réseau parmi celles qui lui sont accessibles.

Selon d'autres caractéristiques particulières, ledit contrôlé émet, à destination du réseau IP, un signal de contrôle de session contenant une information selon laquelle le contrôlé possède les moyens nécessaires pour interpréter les identifiants de ressource en termes de réseaux physiques ou virtuels.

Grâce à ces dispositions, l'opérateur du réseau est informé de la possibilité de contrôler un client en mettant en oeuvre la présente invention. Ces dispositions pourront par exemple être mises en oeuvre à chaque enregistrement initial d'un client dans le réseau IP.

L'invention concerne également, selon un deuxième aspect, un procédé de sélection d'une ressource réseau, comprenant une étape d'interception, dans un réseau IP, par un dispositif dit "contrôleur", d'une requête émise ou relayée par un dispositif dit "contrôlé" ou à destination d'un dispositif dit "contrôlé". Ledit procédé est remarquable en ce que ledit contrôleur envoie ensuite au contrôlé un signal de contrôle de session contenant un identifiant de ressource représentatif d'un réseau physique ou virtuel que le contrôlé peut ou doit utiliser pour satisfaire ladite requête.

Les avantages de ce deuxième aspect de l'invention sont les mêmes que ceux du premier aspect.

Selon des caractéristiques particulières :
- le contrôleur reçoit ensuite de la part dudit contrôlé un identifiant de ressource représentatif de la ressource réseau que le contrôlé a effectivement sélectionnée, et
- le contrôleur utilise cette information pour déterminer si ladite requête doit être satisfaite ou rejetée.

Grâce à ces dispositions, on peut commodément mettre en œuvre la politique choisie par l'opérateur réseau à cet égard.

Corrélativement, l'invention concerne divers dispositifs.

Elle concerne ainsi, selon un troisième aspect, un dispositif dit "contrôlé" connecté à un réseau IP et pouvant accéder en outre à au moins un autre réseau de télécommunications physique et/ou virtuel, comprenant des moyens pour, suite à l'émission ou le relai d'une requête par ledit contrôlé ou à destination dudit contrôlé, recevoir un signal de contrôle de session faisant suite à ladite requête. Ledit dispositif est remarquable en ce qu'il comprend en outre des moyens pour interpréter un identifiant de ressource contenu dans ledit signal de contrôle de session et représentatif du réseau physique ou virtuel que le contrôlé peut ou doit utiliser pour satisfaire ladite requête.

Selon des caractéristiques particulières, ledit dispositif contrôlé comprend des moyens pour sélectionner une autre ressource réseau s'il constate qu'il lui est impossible de sélectionner une ressource réseau conforme audit identifiant de ressource reçu.

Selon d'autres caractéristiques particulières, ledit dispositif contrôlé comprend des moyens pour émettre ensuite, à destination du réseau IP, un signal de contrôle de session contenant un identifiant de ressource représentatif de la ressource réseau que le dispositif contrôlé a effectivement sélectionnée.

Selon encore d'autres caractéristiques particulières, ledit dispositif contrôlé comprend des moyens pour émettre, à destination du réseau IP, un signal de contrôle de session contenant une information selon laquelle le contrôlé possède les moyens nécessaires pour interpréter les identifiants de ressource en termes de réseaux physiques ou virtuels.

L'invention concerne également, selon un quatrième aspect, un dispositif dit "contrôleur" situé dans un réseau IP, comprenant des moyens pour intercepter une requête émise ou relayée par un dispositif dit "contrôlé" ou à destination d'un dispositif dit "contrôlé". Ledit dispositif est remarquable en ce qu'il comprend en outre des moyens pour envoyer ensuite audit contrôlé un signal de contrôle de session contenant un identifiant de ressource représentatif d'un réseau physique ou virtuel que le contrôlé peut ou doit utiliser pour satisfaire ladite requête.

Selon des caractéristiques particulières, ledit dispositif contrôleur comprend en outre des moyens pour déterminer si ladite requête doit être satisfaite ou rejetée, sur la base d'un signal de contrôle de session reçu de la part dudit contrôlé et contenant un identifiant de ressource représentatif de la ressource réseau effectivement sélectionnée par le contrôlé.

Selon d'autres caractéristiques particulières, ledit dispositif contrôleur comprend en outre des moyens pour prendre en compte l'information selon laquelle le contrôlé possède les moyens nécessaires pour interpréter les identifiants de ressource en termes de réseaux physiques ou virtuels.

Les avantages offerts par ces dispositifs sont essentiellement les mêmes que ceux offerts par les procédés corrélatifs succinctement exposés ci-dessus.

On notera qu'il est possible de réaliser les dispositifs succinctement décrits ci-dessus dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de sélection d'une ressource réseau succinctement exposés ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente schématiquement un système pour la fourniture de services multimédia apte à mettre en oeuvre l'invention, et
- la figure 2 représente un schéma fonctionnel de la sélection de ressource selon un mode de réalisation de l'invention.

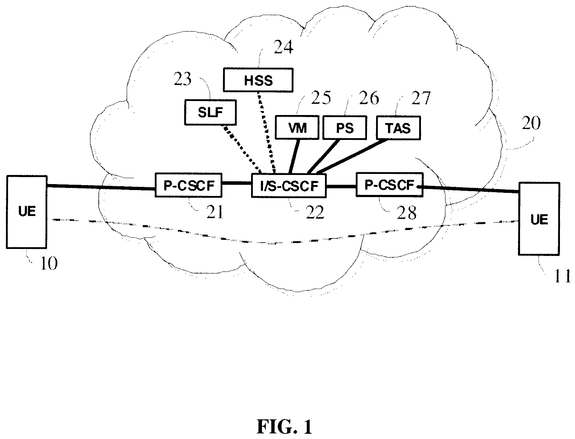

Le système illustré sur la **figure 1** est fondé sur une architecture de réseau de type IMS, tel que présenté succinctement ci-dessus. Les services multimédia offerts par un tel système peuvent comprendre des services de téléphonie, de vidéo-téléphonie, de partage de contenu (*"content*-*sharing*ʺ en anglais), de présence, de messagerie instantanée, ou de télévision. Ces services sont à la disposition de l'utilisateur d'un terminal UE (pour *"User Equipment*ʺ en anglais) 10 sur un réseau 20 comprenant une infrastructure de transport IP et des serveurs à travers lesquels le terminal 10 peut échanger des flux multimédias et des signaux de contrôle de session conformes au protocole SIP, notamment avec un autre terminal UE 11, les terminaux 10 et 11 s'étant au préalable enregistrés auprès des serveurs IMS du réseau 20.

Le terminal 10, 11 est un terminal fixe ou mobile, ou une passerelle domestique ou d'entreprise, disposant de moyens de signalisation SIP et pouvant comprendre des moyens de restitution d'un contenu audiovisuel.

Comme le montre la figure 1, ce système de fourniture de services multimédia s'appuie sur un réseau 20 conforme à l'architecture IMS définie au 3GPP, et qui comprend :
- une infrastructure de transport IP (non représentée) ;
- un ou plusieurs serveurs d'appel I/S-CSCF (pour la combinaison d'une fonction *"Interrogating-Call Server Control Function"* et d'une fonction *"Serving-Call Server Control Function"* dans le même serveur) ; un serveur d'appel I/S-CSCF 22 gère notamment la procédure d'enregistrement des dispositifs connectés au réseau 20 ; en effet, pour qu'un tel dispositif puisse bénéficier des services fournis par ce réseau, ce dispositif doit, sauf exceptions (cas de certains appels d'urgence) s'enregistrer auprès du serveur I/S-CSCF 22 ; le serveur I/S-CSCF 22 gère également le routage de la signalisation entre le terminal 10 et les serveurs de messagerie vocale VM 25, de présence PS 26 et de téléphonie TAS 27, ainsi que le routage en direction d'autres terminaux gérés par le même réseau IMS (comme par exemple le terminal 11) et le routage de la signalisation entre ce réseau IMS 20 et d'autres réseaux (non-représentés) ;
- un (ou plusieurs) serveur(s) P-CSCF (pour *"Proxy-Call Server Control Function"*) ; le serveur P-CSCF 21 (respectivement, 28) est le point de contact SIP du terminal 10 (respectivement, 11) dans le réseau IMS ; ainsi, toute la signalisation SIP échangée entre le terminal 10 (respectivement, 11) et le serveur d'appel I/S-CSCF 22 passe par ce serveur P-CSCF 21 (respectivement, 28) ;
- un ou plusieurs serveurs de base de données, de type HSS (pour *"Home Subscriber Serve"*) ; un serveur HSS 24 contient le profil de l'utilisateur du terminal 10 en termes de données d'authentification, de localisation et de services souscrits ;
- optionnellement, un serveur de type SLF (pour *"Subscriber Location Function"*) ; un serveur SLF 23 est utilisé dans les réseaux contenant plusieurs serveurs HSS ; ce serveur SLF 23 est interrogé par les fonctions I-CSCF et S-CSCF pour trouver l'adresse du serveur HSS 24 hébergeant les données de l'utilisateur du terminal 10 ;
- un (ou plusieurs) serveur(s) de messagerie vocale VM 25 ; le serveur VM 25 gère la souscription du terminal 10 aux événements de dépôt/consultation des messages de l'utilisateur de ce terminal, et notifie le terminal 10 lors de l'occurrence de ces événements ;
- un (ou plusieurs) serveur(s) de présence PS 26 ; le serveur PS 26 gère la souscription du terminal 10 aux événements de présence que l'utilisateur de ce terminal souhaite surveiller, et notifie le terminal lors de l'occurrence de ces événements ; et
- un (ou plusieurs) serveur(s) de téléphonie TAS 27 ; un serveur TAS gère les services téléphoniques auxquels l'utilisateur du terminal 10 a souscrits auprès de son opérateur, tels que la présentation du numéro ou le renvoi d'appel.

Les serveurs de messagerie vocale VM 25, les serveurs de présence PS 26 et les serveurs de téléphonie TAS 27 sont des exemples de ce que l'on appelle des "serveurs d'applications" (*"application servers"* ou AS en anglais).

Le serveur de base de données HSS 24 est notamment interrogé :
- par la fonction I-CSCF lors de l'enregistrement du terminal 10 afin d'allouer un serveur I/S-CSCF 22 à l'utilisateur de ce terminal ou de retrouver le serveur I/S-CSCF 22 déjà alloué à cet utilisateur ;
- par la fonction S-CSCF lors de l'enregistrement initial du terminal 10 afin de télécharger les données concernant les services souscrits par cet utilisateur, dont notamment les points de détection qui permettront au serveur I/S-CSCF 22 de déterminer quel message de signalisation il doit acheminer vers quel serveur d'application (comme par exemple le VM 25, le PS 26 ou le TAS 27) ;
- par la fonction S-CSCF lors des enregistrements de l'utilisateur du terminal 10, afin d'informer le serveur HSS 24 de l'installation ou de la prolongation d'un enregistrement de cet utilisateur sur le serveur I/S-CSCF 22 ; et
- par la fonction S-CSCF, afin de récupérer les informations nécessaires à l'authentification de la signalisation émise par l'utilisateur du terminal 10.

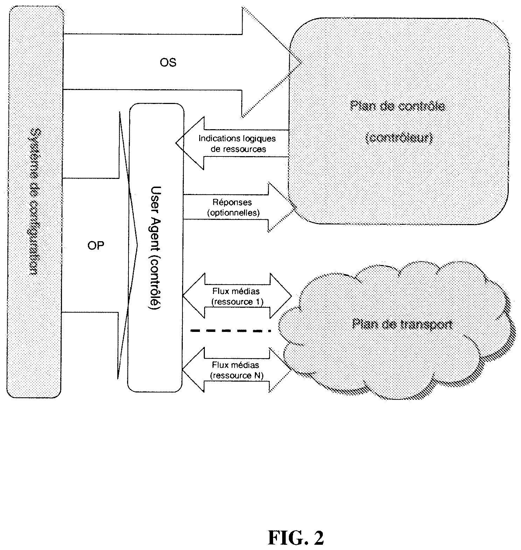

On va maintenant illustrer le fonctionnement et les avantages de l'invention dans le cadre d'un mode de réalisation illustré sur la **figure 2****.**

L'invention utilise les notions de "contrôleur" et de "contrôlé" : le "contrôleur" est une entité qui indique à l'entité "contrôlé" le choix préférentiel ou exclusif d'une ressource (réseau physique et/ou virtuel, tels que définis ci-dessus) du plan de transport.

Dans l'exemple d'architecture représenté sur la figure 1 :
- le rôle de contrôlé peut être notamment joué par le terminal 10 ou le terminal 11, ou par une passerelle (non représentée) d'opérateur réseau, et
- le rôle du contrôleur peut être notamment joué par un serveur S-CSCF ou I/S-CSCF 22 et/ou par l'un des serveurs d'application 25, 26 et 27.

Pour fixer les idées, on ne considérera ci-dessous que le terminal 10 dans le rôle du contrôlé demandeur, le terminal 11 dans le rôle du contrôlé demandé, et le serveur I/S-CSCF 22 dans le rôle du contrôleur pour ces deux terminaux 10 et 11.

Selon l'invention, on définit un identifiant de ressource, qui se présente sous la forme d'une chaîne alphanumérique quelconque. Cet identifiant est de préférence inséré dans certains messages de signalisation échangés par les entités contrôleur et contrôlé. On peut ainsi sélectionner un type de ressource appel par appel, méthode par méthode ou encore service par service en fonction de critères propres au contrôleur.

On notera à cet égard que l'identification concrète de la ressource (tel réseau physique, ou tel réseau virtuel) doit être réalisée par le contrôlé qui reçoit l'identifiant de ressource selon l'invention, et ne doit pas être de la responsabilité du contrôleur, qui doit simplement reconnaître qu'il y a nécessité d'une utilisation particulière sans se soucier de la mise en oeuvre réelle (qui peut changer au cours du temps). On respecte ainsi l'indépendance du plan de contrôle vis-à-vis du plan de transport (et plus généralement le modèle ISO d'indépendance entre couches). L'identifiant de ressource échangé entre le contrôleur et le contrôlé est donc purement logique. La distinction entre "identifiant de ressource" selon l'invention, et identification concrète de la ressource permet au contrôleur de rester transparent aux évolutions et modifications opérées dans le plan de transport.

Comme illustré sur la figure 2, le système de configuration (notamment ce qu'on appelle le "système d'information"), qui gère l'ensemble du réseau, doit donc s'assurer, lors de toute installation ou mise à jour, que contrôleur et contrôlé utilisent chaque identifiant de ressource disponible de manière complémentaire. C'est pourquoi :
- d'une part (opération "OS" sur la figure 2), un système de configuration géré par l'opérateur du réseau déclare auprès du contrôleur l'identifiant de ressource associé respectivement à chacun des services ou usages offerts aux clients, suite à quoi le contrôleur est configuré en conséquence, et
- d'autre part (opération "OP" sur la figure 2), ledit système de configuration déclare auprès du contrôlé l'identifiant de ressource associé respectivement à chacune des ressources accessibles au contrôlé (offertes ou souscrites par lui), suite à quoi le contrôlé est configuré en conséquence.

Dans le cadre de l'architecture IMS envisagée ici à titre d'exemple, les échanges entre contrôleurs et contrôlés pour les sélections de ressources prennent la forme de signaux SIP. L'identifiant de ressource selon l'invention pourra alors être commodément inclus sous forme d'étiquette dans un nouvel en-tête (désigné par "Ressource-control" dans les exemples ci-dessous), qui sera quant à lui inséré dans différentes méthodes SIP, selon la phase où l'on se trouve pour le choix de la ressource par le contrôleur et la progression du dialogue SIP. Cet en-tête selon l'invention pourra ainsi notamment (mais pas exclusivement) être inséré dans les méthodes INVITE, UPDATE, re-INVITE et INFO, ainsi que dans les réponses 1XX ou 2XX.

Selon un premier mode de réalisation, le contrôleur 22 n'attend pas de confirmation en retour de la part du contrôlé 10. Voici un exemple de messages échangés entre contrôleur 22 et contrôlé 10 conformément à ce mode de réalisation :

```
MESSAGE 1, Contrôlé => Contrôleur :
 INVITE sip: urgences_samu@orange.com SIP/2.0
 Via: [...]
 Max-Forwards: 70
 To: <sip: urgences_samu@orange.com>
 From: [...]
 Call-ID: [...]
 CSeq: 314159 INVITE
 Contact: [...]
 Content-Type: application/sdp
 Content-Length: 142
 (partially shown : )
 v=0
 m=audio RTP/AVP 43210 8
 ...
```

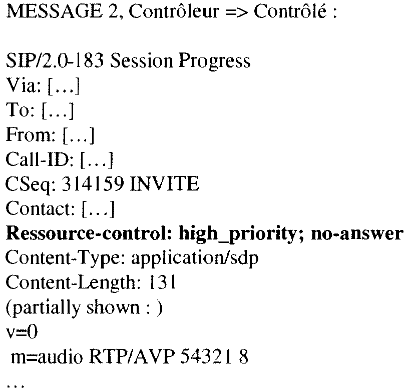

Dans l'exemple ci-dessus, le contrôleur 22 a reconnu, dans la requête issue du terminal 10, une demande pour un appel VoIP urgent, et recommande la sélection d'une ressource réseau identifiée par l'identifiant de ressource "high_priority", tout en indiquant qu'il est inutile de lui répondre (étiquette "no-answer").

De manière analogue, un contrôleur peut émettre un signal de contrôle de session vers un demandé, afin de recommander à ce demandé la sélection de la ressource réseau identifiée dans ladite requête par un certain identifiant de ressource. On notera qu'un tel message sera utile au cas où le demandé a accès à une pluralité de ressources réseau, et ce, quelle que soit la situation du demandeur, c'est-à-dire que le demandeur ait quant à lui accès à une pluralité de ressources, ou à une seule ressource (auquel cas il est évidemment inutile de recommander au demandeur un type particulier de ressource réseau).

Dans le système considéré ici, le demandé pourrait par exemple être le terminal 11 (qui est, on le rappelle, lui aussi contrôlé, par le contrôleur 22). Faisant suite à l'exemple ci-dessus, où le demandé est "urgences_samu", ce message peut prendre la forme suivante :

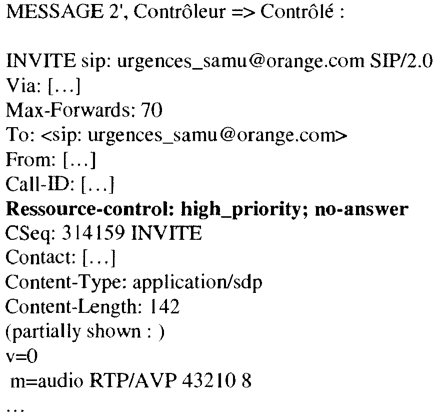

Comme dans le cas du message 2 ci-dessus vis-à-vis du contrôlé 10, le contrôleur recommande au contrôlé 11 la sélection d'une ressource réseau identifiée par l'identifiant de ressource "high_priority", tout indiquant dans ce message 2' que le contrôlé 11 n'est pas tenu de lui répondre (étiquette "no-answer").

On notera que, de manière générale, il ne sera pas toujours possible pour un contrôlé d'accéder à une ressource du type indiqué par son contrôleur. Par exemple, si l'identifiant de ressource correspond à une ligne ADSL, le contrôlé peut constater que cette ligne ADSL est indisponible (cela se produit notamment lorsqu'une ligne ADSL est non-synchronisée) ; un autre exemple est fourni par la situation où une configuration a été mise à jour dans le coeur de réseau mais pas encore au niveau des clients, de sorte que le contrôlé se trouve dans l'impossibilité d'interpréter l'identifiant de ressource fourni par son contrôleur.

Dans ce premier mode de réalisation, si la ressource souhaitée n'est pas disponible pour le contrôlé 10, ou si ce dernier ne reconnaît pas la demande, alors une ressource par défaut est sélectionnée et le dialogue SIP se poursuit normalement. On notera qu'en raison de l'indépendance du plan de contrôle vis-à-vis du plan de transport, le contrôleur 22 n'a pas les moyens de vérifier si le flux multimédia établi ensuite par le contrôlé 10 utilise ou non la ressource recommandée par le contrôleur 22.

Selon un deuxième mode de réalisation, le contrôlé 10, après avoir reçu un identifiant de ressource de la part du contrôleur 22, est tenu d'indiquer en réponse à ce dernier l'identifiant du type de ressource effectivement sélectionné par le contrôlé 10.

Dans cette réponse au contrôleur 22 de la part du contrôlé 10, ce dernier peut avantageusement utiliser un en-tête analogue à celui utilisé par le contrôleur 22 dans le message d'indication de ressource, c'est-à-dire inclure un identifiant de ressource identique à celui fourni par le contrôleur, dans l'hypothèse où le type de ressource demandé était disponible et a été sélectionné. Si le type de ressource indiqué n'était plus disponible, l'identifiant de ressource inséré dans la réponse sera différent.

Voici un exemple de messages échangés entre contrôleur 22 et contrôlé 10 conformément à ce deuxième mode de réalisation :

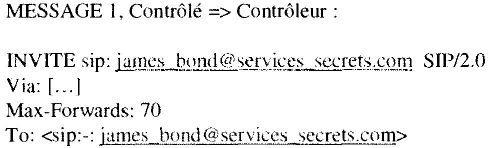

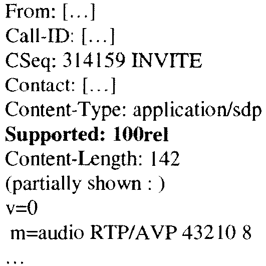

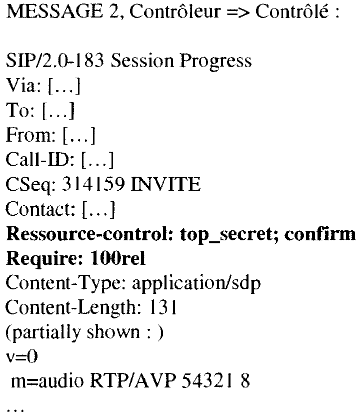

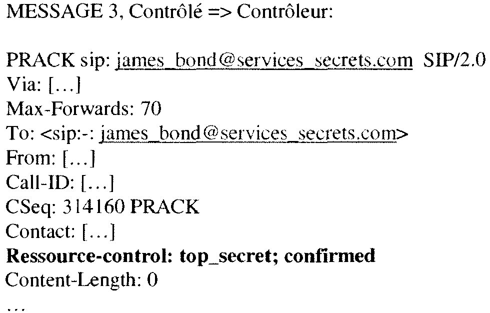

De manière équivalente, on peut utiliser, à la place des messages 2 et 3 ci-dessus, les messages 2bis et 3bis suivants :

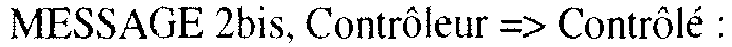

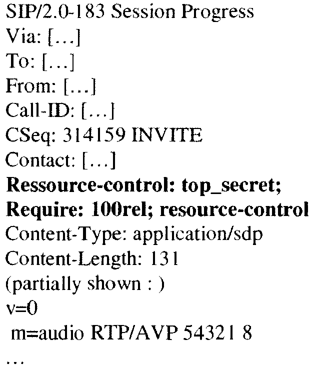

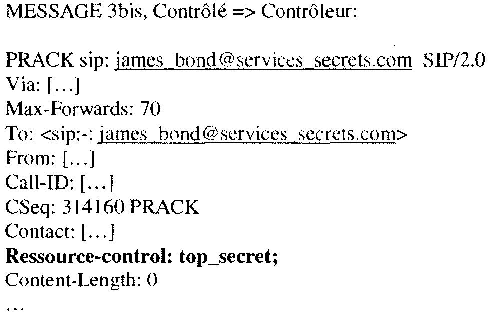

Dans l'exemple ci-dessus, le contrôleur 22 a reconnu que le destinataire de l'appel ("james_bond") appartient à la catégorie de clients appelée "services_secrets". Il commande donc au contrôlé 10 la sélection d'une ressource identifiée par l'identifiant de ressource "top_secret". Dans son message 2 ou 2bis, le contrôleur 22 demande au contrôlé 10 une confirmation explicite ; pour ce faire, il utilise une étiquette classique "confirm" dans l'en-tête "Ressource-control" selon l'invention (message 2), ou une nouvelle étiquette (*"option-tag"* en anglais) "ressource-control", désignant les moyens de mise en oeuvre de la présente invention, dans l'en-tête classique "Require" (message 2bis).

Par la réponse en message 3 ou 3bis, le contrôlé 10 confirme qu'il a pu sélectionner la ressource associée à l'identifiant de ressource "top_secret". Cette ressource peut par exemple être un tunnel IP-SEC sécurisé et crypté, aménagé dans un VLAN spécifique.

Comme dans le premier mode de réalisation, le contrôleur 22 peut alors éventuellement émettre un signal de contrôle de session vers le demandé, afin de lui recommander de sélectionner la ressource réseau identifiée par l'identifiant de ressource "top_secret", au cas où le demandé aurait accès à une pluralité de ressources réseau.

Un avantage de ce deuxième mode de réalisation est qu'il permet au contrôleur 22 de refuser l'établissement du flux multimédia s'il estime que le type de ressource effectivement sélectionné par le contrôle 10 est inadéquat. Dans l'exemple ci-dessus, le contrôleur 22 aurait pu refuser l'appel VoIP si le demandeur 10, dans son message 3 ou 3bis, avait proposé de placer cet appel sur un réseau non sécurisé.

Il est clair que, dans le cadre de ce deuxième mode de réalisation, il est fortement souhaitable que le contrôleur sache si le contrôlé est bien équipé des moyens requis pour pouvoir mettre en œuvre l'invention.

Quel que soit le mode de réalisation de l'invention, on peut, pour permettre au contrôleur de savoir si le contrôlé est bien équipé des moyens requis pour pouvoir mettre en oeuvre l'invention, prévoir les deux variantes suivantes.

Selon une première variante, une requête émise par un contrôlé 10 comprend une mention explicite à cet effet. En reprenant l'exemple ci-dessus, il suffira de remplacer, dans le message 1, l'en-tête
**Supported: 100rel**
par l'en-tête
**Supported: 100rel; ressource-control**
incluant l'étiquette (*option-tag*) "ressource-control" selon l'invention.

Selon une seconde variante, un contrôleur 22 demande (à tout moment) confirmation à cet effet à un contrôlé 10, en utilisant une méthode OPTIONS selon la RFC 3261. Voici un exemple d'un tel échange entre contrôleur 22 et contrôlé 10 :

```
 Contrôleur => Contrôlé :
 OPTIONS sip:controle@orange.com SIP/2.0
 Via: [...]
 Max-Forwards: 70
 To: <sip:controle@orange.com>
 From: <sip:controleur@orange.com>;tag=1928301774
 Call-ID: a84b4c76e66710
 CSeq: 63104 OPTIONS
 Contact: [...]
 Accept: [...]
 Content-Length: 0
```

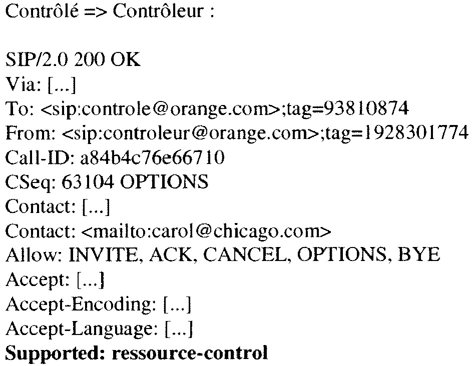

Lorsque le contrôleur 22 reçoit la réponse ci-dessus, il sait, en raison de l'étiquette (*option-tag*) "resource-control" selon l'invention incluse dans l'en-tête classique "Supported", que le contrôlé 10 est équipé des moyens requis pour pouvoir mettre en oeuvre l'invention.

Si en revanche, le contrôleur 22 reçoit une réponse ne comprenant pas d'en-tête "Supported" ou comprenant un en-tête "Supported" dans lequel l'étiquette "ressource-control" n'apparaît pas, alors le contrôleur 22 n'est pas en mesure de savoir si ce client est capable de mettre en œuvre l'invention, c'est-à-dire si ce client peut être contrôlé quant à la sélection de ressource réseau. Comment les requêtes d'un tel client seront traitées dépendra alors de la politique mise en place par l'opérateur du réseau 20.

La mise en œuvre de l'invention au sein des noeuds du réseau de télécommunications (plus précisément, les terminaux 10 et 11, ainsi que les serveurs 22, 25, 26 et 27 dans l'exemple de réalisation décrit ci-dessus) peut être réalisée au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre du procédé de sélection d'une ressource réseau selon l'invention.

En effet, l'invention vise aussi un programme d'ordinateur téléchargeable depuis un réseau de communication comprenant des instructions pour l'exécution des étapes d'un procédé de sélection d'une ressource réseau selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (*"floppy disc"* en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé de sélection d'une ressource réseau selon l'invention.

## Revendications

1. Procédé de sélection d'une ressource réseau pour transporter un flux multimédia dans une session multimédia, dans lequel un dispositif dit "contrôlé" (10, 11) connecté à un réseau IP (20) et capable d'accéder en outre à au moins un autre réseau de télécommunications physique et/ou virtuel pour transporter ledit flux multimédia, comprenant une première étape dans laquelle une requête pour établir ladite session multimédia est émise ou relayée par ledit contrôlé (10, 11) ou à destination dudit contrôlé (10, 11) dans ledit réseau IP (20),
dans lequel ledit contrôlé (10, 11):
- reçoit dans une deuxième étape via le réseau IP (20) en provenance d'un dispositif dit "contrôleur" (22, 25, 26, 27), un signal de contrôle de ladite session multimédia contenant un identifiant de ressource représentatif du réseau IP (20) ou dudit autre réseau physique ou virtuel pour transporter ledit flux multimédia que le contrôlé (10, 11) est recommandé d'utiliser pour satisfaire ladite requête;
- sélectionne ladite ressource réseau ou un autre réseau physique ou virtuel pour transporter ledit flux multimédia et envoie au contrôleur une réponse indiquant la ressource effectivement sélectionnée;
- émet, à destination du réseau IP, un signal de contrôle de ladite session multimédia (20) contenant une information selon laquelle le contrôlé (10, 11) possède les moyens nécessaires pour interpréter les identifiants de ressource en termes de réseaux physiques ou virtuels pour transporter ledit flux multimédia.

2. Procédé de sélection d'une ressource réseau pour transporter un flux multimédia dans une session multimédia selon la revendication 1, **caractérisé en ce que**, si ledit contrôlé (10, 11) constate qu'il lui est impossible de sélectionner une ressource réseau conforme audit identifiant de ressource reçu, le contrôlé (10, 11) sélectionne une autre ressource réseau.

3. Procédé de sélection d'une ressource réseau pour transporter un flux multimédia dans une session multimédia, comprenant une première étape d'interception, dans un réseau IP (20), par un dispositif dit "contrôleur" (22, 25, 26, 27), d'une requête pour établir ladite session multimédia émise ou relayée par un dispositif dit "contrôlé" (10, 11) ou à destination d'un dispositif dit "contrôlé" (10, 11), et dans lequel ledit contrôleur:
- envoie dans une deuxième étape au contrôlé (10, 11) un signal de contrôle de ladite session multimédia contenant un identifiant de ressource pour transporter ledit flux multimédia représentatif dudit réseau IP (20) ou d'un autre réseau physique ou virtuel que le contrôlé (10, 11) est recommandé d'utiliser pour satisfaire ladite requête, ledit contrôleur comprenant des moyens pour prendre en compte l'information selon laquelle le contrôlé possède les moyens nécessaires pour interpréter les identifiants de ressource en termes de réseaux physiques ou virtuels;
- reçoit ensuite de la part dudit contrôlé (10, 11) un identifiant de ressource représentatif de la ressource réseau que le contrôlé (10, 11) a effectivement sélectionnée, et le contrôleur (22, 25, 26, 27) utilise cette information pour déterminer si ladite requête doit être satisfaite ou rejetée.

4. Procédé de sélection d'une ressource réseau pour transporter un flux multimédia dans une session multimédia selon l'une quelconque des revendications 1 à 3, **caractérisé en ce que** le réseau IP (20) utilise au moins H.323 ou SIP en tant que protocole de contrôle de session.

5. Dispositif dit "contrôlé" (10, 11) connecté à un réseau IP (20) et capable d'accéder en outre à au moins un autre réseau de télécommunications physique et/ou virtuel pour transporter un flux multimédia, comprenant des moyens pour, suite à l'émission ou le relai dans une première étape d'une requête pour établir une session multimédia par ledit contrôlé (10, 11) ou à destination dudit contrôlé (10, 11) dans ledit réseau IP (20), recevoir dans une deuxième étape via le réseau IP (20) un signal de contrôle de ladite session multimédia faisant suite à ladite requête, dans lequel ledit contrôlé (10, 11) comprend en outre des moyens pour interpréter un identifiant de ressource contenu dans ledit signal de contrôle de ladite session multimédia et représentatif du réseau IP (20) ou dudit autre réseau physique ou virtuel que le contrôlé (10, 11) est recommandé d'utiliser pour satisfaire ladite requête et des moyens pour sélectionner ladite ressource réseau ou un autre réseau physique ou virtuel pour transporter ledit flux multimédia et envoie au contrôleur une réponse indiquant la ressource effectivement sélectionnée;
et comprenant en outre des moyens pour émettre, à destination du réseau IP (20), un signal de contrôle de ladite session multimédia contenant une information selon laquelle le contrôlé (10, 11) possède les moyens nécessaires pour interpréter les identifiants de ressource en termes de réseaux physiques ou virtuels.

6. Dispositif contrôlé (10, 11) selon la revendication 5, **caractérisé en ce qu'**il comprend des moyens pour sélectionner une autre ressource réseau s'il constate qu'il lui est impossible de sélectionner une ressource réseau conforme audit identifiant de ressource reçu.

7. Dispositif contrôlé (10, 11) selon l'une quelconque des revendications 5 et 6, **caractérisé en ce qu'**il est constitué par un terminal fixe ou mobile connecté au réseau IP (20).

8. Dispositif contrôlé selon l'une quelconque des revendications 5 et 6, **caractérisé en ce qu'**il est constitué par une passerelle domestique ou d'entreprise.

9. Dispositif contrôlé selon l'une quelconque des revendications 5 et 6, **caractérisé en ce qu'**il est constitué par une passerelle d'opérateur réseau.

10. Dispositif dit "contrôleur" (22, 25, 26, 27) situé dans un réseau IP (20), comprenant des moyens pour intercepter dans une première étape une requête pour établir une session multimédia émise ou relayée par un dispositif dit "contrôlé" (10, 11) ou à destination d'un dispositif dit "contrôlé" (10, 11), dans lequel ledit "contrôleur" (22, 25, 26, 27) comprend en outre des moyens pour envoyer dans une deuxième étape audit contrôlé (10, 11) un signal de contrôle de ladite session multimédia contenant un identifiant de ressource pour transporter un flux multimédia dans ladite session multimédia représentatif dudit réseau IP (20) ou d'un autre réseau physique ou virtuel que le contrôlé (10, 11) est recommandé d'utiliser pour satisfaire ladite requête, ledit contrôleur comprenant en outre des moyens pour prendre en compte l'information selon laquelle le contrôlé (10, 11) possède les moyens nécessaires pour interpréter les identifiants de ressource en termes de réseaux physiques ou virtuels;
en ce que ledit contrôleur comprend en outre des moyens pour déterminer si ladite requête pour établir ladite session multimédia doit être satisfaite ou rejetée, sur la base d'un signal de contrôle de ladite session multimédia reçu de la part dudit contrôlé (10, 11) et contenant un identifiant de ressource représentatif de la ressource réseau pour transporter ledit flux multimédia effectivement sélectionnée par le contrôlé (10, 11).

11. Dispositif contrôleur selon la revendication 10, **caractérisé en ce qu'**il est constitué par un serveur d'applications (25, 26, 27).

12. Dispositif contrôleur selon la revendication 10, **caractérisé en ce que**, l'infrastructure du réseau IP (20) étant de type IMS, ledit dispositif contrôleur est constitué par un serveur d'appel S-CSCF ou I/S-CSCF (22).

13. Moyen de stockage de données inamovible, ou partiellement ou totalement amovible, comportant des instructions de code de programme informatique pour l'exécution des étapes d'un procédé de sélection d'une ressource réseau selon l'une quelconque des revendications 1 à 4.

14. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de sélection d'une ressource réseau selon l'une quelconque des revendications 1 à 4, lorsqu'il est exécuté sur un ordinateur.

## Patentansprüche

1. Verfahren zur Auswahl einer Netzwerkressource zum Transportieren eines Multimedia-Stroms in einer Multimedia-Sitzung, wobei eine "Kontrollierte" genannte Vorrichtung (10, 11), die mit einem IP-Netzwerk (20) verbunden und imstande ist, weiter auf mindestens ein weiteres physisches und/oder virtuelles Telekommunikationsnetzwerk zuzugreifen, um den Multimedia-Strom zu transportieren, umfassend einen ersten Schritt, bei dem eine Anfrage zum Erstellen der Multimedia-Sitzung durch die Kontrollierte (10, 11 ) oder an die Kontrollierte (10, 11) in der Netzwerk-IP (20) ausgegeben oder weitergeleitet wird, wobei die Kontrollierte (10, 11):
- in einem zweiten Schritt über das IP-Netzwerk (20) von einer "Kontrollierenden" genannten Vorrichtung (22, 25, 26, 27) ein Kontrollsignal der Multimedia-Sitzung empfängt, das eine Ressourcenkennung enthält, die repräsentativ für das IP-Netzwerk (20) oder das weitere physische oder virtuelle Netzwerk zum Transportieren des Multimedia-Stroms ist, das zu verwenden der Kontrollierten (10, 11) empfohlen wird, um die Anfrage zu erfüllen;
- die Netzwerkressource oder ein weiteres physisches oder virtuelles Netzwerk auswählt, um den Multimedia-Strom zu transportieren, und der Kontrollierenden eine Antwort sendet, die auf die tatsächlich ausgewählte Ressource hinweist;
- an das IP-Netzwerk ein Kontrollsignal der Multimedia-Sitzung (20) sendet, das eine Information enthält, wonach die Kontrollierte (10, 11) die nötigen Mittel zum Interpretieren der Ressourcenkennungen in Bezug auf physische oder virtuelle Netzwerke zum Transportieren des Multimedia-Stroms besitzt.

2. Verfahren zur Auswahl einer Netzwerkressource zum Transportieren eines Multimedia-Stroms in einer Multimedia-Sitzung nach Anspruch 1, **dadurch gekennzeichnet, dass**, falls die Kontrollierte (10, 11) feststellt, dass es unmöglich ist, eine Netzwerkressource entsprechend der empfangenen Ressourcenkennung auszuwählen, die Kontrollierte (10, 11) eine andere Netzwerkressource auswählt.

3. Verfahren zur Auswahl einer Netzwerkressource zum Transportieren eines Multimedia-Stroms in einer Multimedia-Sitzung, umfassend einen ersten Abfangschritt in einem IP-Netzwerk (20) durch eine "Kontrollierende" genannte Vorrichtung (22, 25, 26, 27) einer Abfrage zum Erstellen der Multimedia-Sitzung, die durch eine "Kontrollierte" genannte Vorrichtung (10,11) oder an eine "Kontrollierte" genannte Vorrichtung (10, 11) ausgegeben oder weitergeleitet wird, und wobei die Kontrollierende:
- in einem zweiten Schritt der Kontrollierten (10, 11) ein Kontrollsignal der Multimedia-Sitzung sendet, das eine Ressourcenkennung enthält, um den für das IP-Netzwerk (20) oder ein anderes physisches oder virtuelles Netzwerk repräsentativen Multimedia-Strom zu transportieren, das zu verwenden der Kontrollierten (10, 11) empfohlen wird, um die Anfrage zu erfüllen, wobei die Kontrollierende Mittel zum Berücksichtigen der Information umfasst, wonach die Kontrollierte die nötigen Mittel zum Interpretieren der Ressourcenkennungen in Bezug auf physische oder virtuelle Netzwerke besitzt;
- danach von der Kontrollierten (10, 11 ) eine Ressourcenkennung empfängt, die repräsentativ für die Netzwerkressource ist, die die Kontrollierte (10, 11) tatsächlich ausgewählt hat, und die Kontrollierende (22, 25, 26, 27) diese Information verwendet, um zu bestimmen, ob die Anfrage zu erfüllen oder zu verwerfen ist.

4. Verfahren zur Auswahl einer Netzwerkressource zum Transportieren eines Multimedia-Stroms in einer Multimedia-Sitzung nach einem der Ansprüche 1 bis 3,
**dadurch gekennzeichnet, dass** das IP-Netzwerk (20) mindestens H.323 oder SIP als Protokoll zur Sitzungskontrolle verwendet.

5. "Kontrollierte" genannte Vorrichtung (10, 11), die mit einem IP-Netzwerk (20) verbunden und imstande ist, weiter auf mindestens ein weiteres physisches und/oder virtuelles Telekommunikationsnetzwerk zuzugreifen, um einen Multimedia-Strom zu transportieren, Mittel umfassend, um nach dem Ausgeben oder dem Weiterleiten in einem ersten Schritt einer Anfrage zum Erstellen einer Multimedia-Sitzung durch die Kontrollierte (10, 11) oder an der Kontrollierte (10, 11) in dem IP-Netzwerk(20) in einem zweiten Schritt über das IP-Netzwerk (20) ein Kontrollsignal der Multimedia-Sitzung auf die Afrage folgend zu empfangen, wobei die Kontrollierte (10, 11) weiter Mittel zum Interpretieren einer Ressourcenkennung umfasst, die in dem Kontrollsignal der Multimedia-Sitzung enthalten ist, und repräsentativ für das IP-Netzwerk (20) oder das weitere physische oder virtuelle Netzwerk ist, das zu verwenden der Kontrollierten (10, 11) empfohlen wird, um die Anfrage zu erfüllen, und Mittel zum Auswählen der Netzwerkressource oder eines weiteren physischen oder virtuellen Netzwerks zum Transportieren des Multimedia-Stroms und der Kontrolliernden eine Antwort sendet, die die tatsächlich ausgewählte Ressource anzeigt;
und weiter umfassend:
Mittel zum Senden an das IP-Netzwerk (20) eines Kontrollsignals der Multimedia-Sitzung, das eine Information enthält, wonach die Kontrollierte (10, 11) Mittel besitzt, die notwendig sind, um die Ressourcenkennungen in Bezug auf physische oder virtuelle Netzwerke zu interpretieren.

6. Kontrollierte Vorrichtung (10, 11) nach Anspruch 5, **dadurch gekennzeichnet, dass** sie Mittel zum Auswählen einer anderen Netzwerkressource umfasst, wenn sie feststellt, dass es ihr unmöglich ist, eine Netzwerkressource entsprechend der empfangenen Ressourcenkennung auszuwählen.

7. Kontrollierte Vorrichtung (10, 11) nach einem der Ansprüche 5 und 6,
**dadurch gekennzeichnet, dass** sie durch ein festes oder mobiles Endgerät gebildet wird, das mit dem IP-Netzwerk (20) verbunden ist.

8. Kontrollierte Vorrichtung nach einem der Ansprüche 5 und 6,
**dadurch gekennzeichnet, dass** sie durch ein Heim- oder Firmen-Gateway gebildet wird.

9. Kontrollierte Vorrichtung nach einem der Ansprüche 5 und 6,
**dadurch gekennzeichnet, dass** sie durch ein Netzwerkbetreiber-Gateway gebildet wird.

10. "Kontrollierende" genannte Vorrichtung (22, 25, 26, 27), die sich in einem IP-Netzwerk (20) befindet, umfassend Mittel zum Abfangen in einem ersten Schritt einer Abfrage zum Erstellen der Multimedia-Sitzung, die durch eine "Kontrollierte" genannte Vorrichtung (10,11) oder an eine "Kontrollierte" genannte Vorrichtung (10, 11) ausgegeben oder weitergeleitet wird, und wobei die "Kontrollierende" (22, 25, 26, 27) weiter Mittel zum Senden in einem zweiten Schritt an die Kontrollierte (10, 11) eines Kontrollsignals der Multimedia-Sitzung umfasst, das eine Ressourcenkennung enthält, um den für das IP-Netzwerk (20) oder ein anderes physisches oder virtuelles Netzwerk repräsentativen Multimedia-Strom zu transportieren, das zu verwenden der Kontrollierten (10, 11) empfohlen wird, um die Anfrage zu erfüllen, wobei die Kontrollierende umfasst:
weiter Mittel zum Berücksichtigen der Information, wonach die Kontrollierte (10, 11) die nötigen Mittel zum Interpretieren der Ressourcenkennungen in Bezug auf physische oder virtuelle Netzwerke besitzt;
dadurch dass die Kontrollierende weiter Mittel zum Bestimmen umfasst, ob die Anfrage zum Erstellen der Multimedia-Sitzung zu erfüllen oder zu verwerfen ist, auf Basis eines Kontrollsignals der Multimedia-Sitzung, das von der Kontrollierten (10, 11) empfangen wird, und eine Ressourcenkennung enthält, die repräsentativ für die Netzwerkressource zum Transportieren des Multimedia-Stroms ist, die tatsächlich von der Kontrollierten (10, 11) ausgewählt wird.

11. Kontrollierende Vorrichtung nach Anspruch 10, **dadurch gekennzeichnet, dass** sie durch einen Anwendungsserver (25, 26, 27) gebildet wird.

12. Kontrollierende Vorrichtung nach Anspruch 10, **dadurch gekennzeichnet, dass** die Infrastruktur des IP-Netzwerks (20) in der Art IMS ist, wobei die kontrollierende Vorrichtung durch einen S-CSCF oder I/S-CSCF Aufruf-Server (22) gebildet wird.

13. Mittel zum Speichern von nicht entfernbaren, oder teilweise oder vollkommen entfernbaren Daten, das elektronische Programmcodeanweisungen zum Ausführen der Schritte eines Verfahrens zum Auswählen einer Netzwerkressource nach einem der Ansprüche 1 bis 4 umfasst.

14. Computerprogramm, das von einem Kommunikationsnetzwerk herunterladbar und/oder auf einem computerlesbaren und/oder von einem Mikroprozessor ausführbaren Support gespeichert ist, **dadurch gekennzeichnet, dass** es Anweisungen zum Ausführen der Schritte eines Verfahrens zum Auswählen einer Netzwerkressource nach einem der Ansprüche 1 bis 4 umfasst,
wenn es auf einem Computer ausgeführt wird.

## Claims

1. - A method for selecting a network resource for carrying a multimedia stream in a multimedia session, wherein a so-called "controlled" device (10, 11) is connected to an IP network (20) and capable of further accessing at least one other physical and/or virtual telecommunications network for carrying said multimedia stream, comprising a first step wherein a request for establishing said multimedia session is transmitted or relayed by said controlled (10, 11) or to said controlled (10, 11) in said IP network (20),
wherein said controlled (10, 11) :
- receives, in a second step via the IP network (20) from a so-called "controller" device (22, 25, 26, 27), a control signal of said multimedia session containing a resource identifier representative of the IP network (20) or of said other physical or virtual network for carrying said multimedia stream that the controlled (10, 11) is recommended to use in order to satisfy said request ;
- selects said network resource or another physical or virtual network for carrying said multimedia stream and sends to the controller a response indicating the effectively selected resource ;
- transmits to the IP network a control signal of said multimedia session (20) containing information that the controlled (10, 11) has means required to interpret the resource identifiers in terms of physical or virtual networks for carrying said multimedia stream.

2. - The method for selecting a network resource for carrying a multimedia stream in a multimedia session according to claim 1, **characterized in that**, if said controlled (10, 11) notices that it is unable to select a network resource in compliance with said received resource identifier, the controlled (10, 11) selects another network resource.

3. - A method for selecting a network resource for carrying a multimedia stream in a multimedia session, comprising a first step of intercepting, in an IP network (20), by a so-called "controller" device (22, 25, 26, 27), a request for establishing said multimedia session transmitted or relayed by a so-called "controlled" device (10, 11) or to a so-called "controlled" device (10, 11), and wherein said controller :
- sends, in a second step to the controlled (10, 11), a control signal of said multimedia session containing an identifier of resource for carrying said multimedia stream representative of said IP network (20) or of another physical or virtual network that the controlled (10, 11) is recommended to use in order to satisfy said request, said controller comprising means for taking into account information that the controlled has means required to interpret the resource identifiers in terms of physical or virtual networks;
- then receives, from said controlled (10, 11), a resource identifier representative of the network resource that the controlled (10, 11) has effectively selected, and the controller (22, 25, 26, 27) uses this information to determine whether said request should be fulfilled or rejected.

4. - The method for selecting a network resource for carrying a multimedia stream in a multimedia session according to any one of claims 1 to 3, **characterized in that** the IP network (20) uses at least H.323 or SIP as a session control protocol.

5. - A so-called "controlled" device (10, 11) connected to an IP network (20) and capable of further accessing at least one other physical and/or virtual telecommunications network for carrying a multimedia stream, comprising means for, after transmitting or relaying in a first step a request for establishing a multimedia session by said controlled (10, 11) or to said controlled (10, 11) in said IP network (20), receiving in a second step via the IP network (20) a control signal of said multimedia session following said request, wherein said controlled (10, 11) further comprises means for interpreting a resource identifier contained in said control signal of said multimedia session and representative of the IP network (20) or of said other physical or virtual network that the controlled (10, 11) is recommended to use in order to satisfy said request, and means for selecting said network resource or another physical or virtual network for carrying said multimedia stream and sends to the controller a response indicating the effectively selected resource, and further comprising means for transmitting, to the IP network (20), a control signal of said multimedia session containing information that the controlled (10, 11) has means required to interpret the resource identifiers in terms of physical or virtual networks.

6. - The controlled device (10, 11) according to claim 5, **characterized in that** it comprises means for selecting another network resource if it notices that it is unable to select a network resource in compliance with said received resource identifier.

7. - The controlled device (10, 11) according to any one of claims 5 and 6, **characterized in that** it consists of a fixed or mobile terminal connected to the IP network (20).

8. - The controlled device according to any one of claims 5 and 6, **characterized in that** it consists of a home or enterprise gateway.

9. - The controlled device according to any one of claims 5 and 6, **characterized in that** it consists of a network operator gateway.

10. - A so-called "controller" device (22, 25, 26, 27) located in an IP network (20), comprising means for intercepting in a first step a request for establishing a multimedia session transmitted or relayed by a so-called "controlled" device (10, 11) or to a so-called "controlled" device (10, 11), wherein said "controller" (22, 25, 26, 27) further comprises means for sending in a second step to said controlled (10, 11) a control signal of said multimedia session containing an identifier of resource for carrying a multimedia stream in said multimedia session representative of said IP network (20) or of another physical or virtual network that the controlled (10, 11) is recommended to use in order to satisfy said request, said controller further comprising means for taking into account information that the controlled (10, 11) has means required to interpret the resource identifiers in terms of physical or virtual networks ; wherein said controller further comprises means for determining whether said request for establishing said multimedia session should be fulfilled or rejected, based on a control signal of said multimedia session received from said controlled (10, 11) and containing a resource identifier representative of the network resource for carrying said multimedia stream effectively selected by the controlled (10, 11).

11. - The controller device according to claim 10, **characterized in that** it consists of an application server (25, 26, 27).

12. - The controller device according to claim 10, **characterized in that**, infrastructure of the IP network (20) being of the IMS type, said controller device consists of a S-CSCF or I/S-CSCF call server (22).

13. - A non-removable, or partially or entirely removable, data storage medium comprising computer program code instructions for executing steps of a network resource selection method according to any one of claims 1 to 4.

14. - A computer program downloadable from a communication network and/or stored on a computer-readable medium and/or executable by a microprocessor, **characterized in that** it comprises instructions for executing steps of a network resource selection method according to any one of claims 1 to 4, when executed on a computer.
